# EUROPÄISCHE PATENTSCHRIFT

(11) **EP 2 932 220 B1**
(45) Veröffentlichungstag und Bekanntmachung des Hinweises auf die Patenterteilung: **27.02.2019**
(21) Anmeldenummer: 13777281.0
(22) Anmeldetag: 16.10.2013
(51) Int. Cl.: G01L 19/00, G01L 19/14, G01K 1/14, G01K 13/02

(54) **VORRICHTUNG ZUR ERFASSUNG DES DRUCKS UND DER TEMPERATUR EINES MEDIUMS**
APPARATUS FOR DETECTING THE PRESSURE AND THE TEMPERATURE OF A MEDIUM
DISPOSITIF DE DÉTECTION DE LA PRESSION ET DE LA TEMPÉRATURE D'UN MILIEU

(30) Priorität: 13.12.2012 DE 102012223014
(43) Veröffentlichungstag der Anmeldung: 21.10.2015
(73) Patentinhaber: Robert Bosch GmbH, 70442 Stuttgart (DE)
(72) Erfinder: WELTER, Aline, 99817 Eisenach (DE); LUX, Alexander, 73760 Ostfildern (DE); BAETZEL, Gerald, 99817 Eisenach (DE); BARNSTORFF, Vincent, 99817 Eisenach (DE); EIFLER, Georg, 71332 Waiblingen (DE)
(86) Internationale Anmeldenummer: PCT/EP2013/071641
(87) Internationale Veröffentlichungsnummer: WO 2014/090449

(56) Entgegenhaltungen:
- US-B2- 7 043 993

## Beschreibung

### Stand der Technik

Aus dem Stand der Technik ist eine Vielzahl von Sensoren zur Erfassung mindestens einer Eigenschaft eines fluiden Mediums in einem Messraum bekannt. Bei dem fluiden Medium kann es sich beispielsweise um ein Gas und/oder eine Flüssigkeit handeln. Bei der mindestens einen Eigenschaft, welche qualitativ oder quantitativ erfasst werden kann, kann es sich um eine beliebige physikalische und/oder chemische Eigenschaft des fluiden Mediums oder einer Strömung des fluiden Mediums handeln. Insbesondere sind Sensoren bekannt, welche eingerichtet sind, um zumindest eine Temperatur des fluiden Mediums zu erfassen. Die Erfindung wird im Folgenden, ohne Beschränkung weiterer möglicher Ausgestaltungen, im Wesentlichen beschrieben unter Bezugnahme auf so genannte Kombinationssensoren, welche neben einer Temperatur weiterhin einen Druck des fluiden Mediums erfassen können (p-T-Sensoren). Derartige Sensoren sind beispielsweise in Konrad Reif: Sensoren im Kraftfahrzeug, 1. Auflage 2010, Seiten 134-135, Bild 3 und Bild 4, beschrieben. Weiterhin sind derartige kombinierte p-T-Sensoren in der DE 10 2006 043 324 A1 und der DE 197 31 420 A1 dargestellt.

Ein wichtiges Einsatzgebiet für den Einsatz von p-T-Sensoren ist die Kraftfahrzeugtechnik. Beispielsweise bedingt der Einsatz alternativer Kraftstoffe, wie beispielsweise Erdgas, CNG (compressed natural gas), Ethanol oder ähnlicher alternativer Kraftstoffe, den Einsatz angepasster Sensoren, um physikalische Größen wie Druck und Temperatur im Saugrohr oder im Kraftstoffsystem zu ermitteln. Beispielsweise ermöglichen so genannte Mitteldrucksensoren eine Messung von Druck und Temperatur in einem mit CNG betriebenen Kraftstoffsystem. Derartige p-T-Sensoren weisen üblicherweise ein Gehäuse in Form eines Gewindestutzens auf, welcher in das Kraftstoffsystem eingeschraubt werden kann, beispielsweise mittels eines mit dem Gewindestutzen verbundenen Sechskants. Auf den Gewindestutzen aufgebracht ist ein Drucksensorelement, welches über eine Druckbohrung mit dem Kraftstoffsystem verbunden ist. Weiterhin ragt aus dem Gewindestutzen ein Temperaturmessfinger in das fluide Medium, in welchem ein Temperaturfühler in Form eines NTC-Widerstands (Widerstand mit negativem Temperaturkoeffizienten) aufgenommen ist. Dieser Temperaturfühler ist üblicherweise im Inneren einer Tiefziehhülse in einem Klebstoff eingebettet, derart, dass Zuleitungen des Temperaturfühlers am gehäuseseitigen Ende aus der Tiefziehhülse in das Gewinde und aus diesem in einen Elektronikbereich des p-T-Sensors hineinragen. Die Tiefziehhülse wird üblicherweise im Gewindestutzen eingelötet. Der Gewindestutzen mit eingelöteter Tiefziehhülse und der Sechskant sind verschweißt. Das Drucksensorelement ist dem Gewindestutzen üblicherweise aufgelötet. Weiterhin umfasst der p-T-Sensor üblicherweise eine Leiterplatte sowie einen Stecker zur Kontaktierung des Sensors. Saugrohrdrucksensoren ermöglichen eine Messung des Druckes und der Temperatur im Ansaugtrakt, sowohl bei Einsatz eines Turboladers oder nicht und unabhängig davon, ob sie einem Turbolader vorgeschaltet oder nachgeschaltet sind. Diese Sensoren besitzen üblicherweise einen Stutzen mit O-Ring Dichtung zur Montage in eine geeignete Bohrung.

Beim Aufbau derartiger Sensoren ergibt sich eine Vielzahl technischer Herausforderungen. So werden üblicherweise Zuleitungen des Temperatursensorelements an einen so genannten Leadframe geschweißt, also ein Steckerbauteil. Bei der Herstellung des Sensors wird üblicherweise in einem ersten Schritt Klebstoff mittels einer Dosiernadel in die Tiefziehhülse appliziert. Der Klebstoff erfüllt die Funktion einer mechanischen Fixierung und einer thermischen Ankopplung des Temperaturfühlers an die Tiefziehhülse. In einem nächsten Schritt wird das Temperaturfühlermodul, umfassend das Temperatursensorelement und den Leadframe, in die Tiefziehhülse und den Gewindestutzen gefügt. Beim Einlöten der Tiefziehhülse in den Gewindestutzen können jedoch Toleranzen auftreten, beispielsweise Winkelfehler zwischen einer Soll-Ausrichtung der Tiefziehhülse zum Gehäuse und einer Ist-Ausrichtung. Diese Tatsache kann sich bei den weiteren Fertigungsschritten auf einen Dosierprozess auswirken, da beispielsweise eine Dosiernadelpositionierung an diese Ausrichtung angepasst werden müsste. Weiterhin besteht allgemein beim Positionieren und Einführen einer Dosiernadel in die Tiefziehhülse auf einer Länge von beispielsweise ca. 30 mm die Gefahr, dass die Dosiernadel die Wandung der Tiefziehhülse berührt. Diese Berührung kann beispielsweise bedingt sein durch den oben beschriebenen Winkelfehler sowie gegebenenfalls Positionierungstoleranzen der Dosiernadel. Dies kann dazu führen, dass die Dosiernadel verbiegt und dass eine Prozesssicherheit des Dosierprozesses leidet. Weiterhin kann allgemein sowohl durch Meniskusbildung am Nadelausgang der Dosiernadel als auch durch eine Wandberührung der Dosiernadel die Dosiernadel verschmutzen. Aufgrund geringer geometrischer Abstände der Dosiernadel zum Drucksensorelement besteht weiterhin die Gefahr einer unzulässigen Verschleppung von Klebstoff auf das Drucksensorelement. Diese Effekte sind jedoch in der Praxis während der Herstellung nur schwer nachweisbar, und eine Kontrolle des Dosierergebnisses ist in der Regel nur indirekt, durch die Messung eines Ansprechverhaltens beispielsweise des Temperaturfühlers und/oder des Drucksensorelements, möglich.

Weitere technische Herausforderungen bei bekannten Herstellungsprozessen ergeben sich durch eine Positionierung des Temperatursensorelements. So weist das Temperatursensorelement üblicherweise einen Messbereich in Form einer so genannten "Pille" auf, deren Positionierung gegenüber dem oben genannten Leadframe jedoch in der Regel variabel ist. Diese Variabilität rührt dadurch, dass die Drähte der Zuleitung des Temperaturfühlers nach dem Schweißprozess, bei welchem der Temperaturfühler an den Leadframe angeschweißt wird, nicht geführt werden. Hierdurch können Positionsschwankungen der Pille auftreten. Durch die schwankende Positionierung der Komponenten Pille und Leadframe sind aufwändige Vermessungen und Positionierprozesse erforderlich, um das Temperaturfühlermodul automatisiert in den Gewindestutzen und die Tiefziehhülse zu fügen. Aufgrund der geringen Platzverhältnisse zwischen dem Drucksensorelement und dem Temperaturfühlermodul besteht beim Fügeprozess zudem die Gefahr, dass das Drucksensorelement beschädigt wird. Insgesamt wäre somit ein Aufbaukonzept wünschenswert, welches die genannten Nachteile vermeidet und welches insbesondere eine hohe Prozesssicherheit gewährleistet und welches auch bei engen Platzverhältnissen in Kombinationssensoren, insbesondere p-T-Sensoren, zuverlässig und automatisiert einsetzbar ist.

Aus dem Dokument US 7 043 993 B2 ist eine Vorrichtung zur Erfassung des Drucks und der Temperatur eines Mediums bekannt, wobei in einem gemeinsamen Gehäuse ein Temperatursensor und ein Drucksensor angeordnet sind. Das Gehäuse umfasst wenigsten einen Messraum, der über einen Druckstutzen mit einem das Medium aufnehmenden Raum verbunden ist, und weist zur Aufnahme des Temperatursensors eine in den Druckstutzen mündende konische Durchführung auf, die sich zum Messraum hin erweitert und in der abschnittsweise eine die Anschlussleitungen des Temperatursensors umschließende Dichtmasse vorgesehen ist.

### Offenbarung der Erfindung

Es wird eine erfindungsgemäße Vorrichtung zur Erfassung des Drucks und der Temperatur eines Mediums vorgeschlagen, bei welcher in einem gemeinsamen Gehäuse ein Temperatursensor und ein Drucksensor angeordnet sind. Hierbei weist das Gehäuse wenigstens einen Messraum auf, wobei der Messraum über einen Druckstutzen mit einem das Medium aufnehmenden Rahmen verbunden ist. Unter einem Messraum ist hierbei lediglich allgemein ein in im Gehäuse geformter Hohlraum zu verstehen, in welchem wenigstens ein Sensor zur Erfassung wenigstens einer Eigenschaft des Mediums in dem Hohlraum angeordnet sein kann. Der Druckstutzen kann hierbei bevorzugt rotationssymmetrisch, beispielsweise in Form eines Hohlzylinders, ausgestaltet sein. Der Druckstutzen ist bevorzugt dazu eingerichtet, in einen das Medium aufnehmenden Raum hineinzuragen. Abermals bevorzugt kooperiert der Druckstutzen hierzu bevorzugt mit einer in einem Wandabschnitt des Medium führenden Raumes angeordneten Öffnung, welche nach der Montage des Druckstutzens durch den Druckstutzen bevorzugt druckdicht gegenüber einer äußeren Umgebung abgedichtet ist.

Bevorzugt steht der Messraum durch den Druckstutzen mit dem das Medium aufnehmenden Raum in der Art in Verbindung, dass das Medium durch den Druckstutzen in den Messraum eindringen kann. Die erfindungsgemäße Vorrichtung sieht es weiterhin vor, dass der Drucksensor in dem Messraum angeordnet ist, um bevorzugt wenigstens den Druck des Mediums in dem Messraum zu erfassen. Der weiterhin von der Vorrichtung umfasste Temperatursensor weist insbesondere Anschlussleitungen auf, wohingegen in dem Gehäuse ferner Anschlusskontakte vorgesehen sind, um die Anschlussleitungen des Temperatursensors zu kontaktieren. Hierbei kann es insbesondere vorgesehen sein, dass die Anschlussleitungen zur elektrischen Verbindung mit den Anschlusskontakten freiliegende Enden, insbesondere Endabschnitte ohne elektrische Isolierung aufweisen. Für die Anschlusskontakte können somit sowohl der elektrischen Verbindung der Anschlussleitungen des Temperatursensors mit einer möglicherweise vorgesehenen ebenso mit den Anschlusskontakten verbundenen Elektronik, als auch zum Halten des Temperatursensors über eine Fixierung der Anschlussleitungen derselben dienen.

Darüber hinaus weist das Gehäuse der erfindungsgemäß vorgeschlagenen Vorrichtung zur Aufnahme des Temperatursensors wenigstens eine in den Stutzen mündende konische Durchführung auf, wobei sich die konische Durchführung zum Druckstutzen hin erweitert. Ebenso ist es bei der vorgeschlagenen Vorrichtung vorgesehen, dass in der konischen Durchführung wenigstens abschnittsweise eine die Anschlussleitungen des Temperatursensors umfließende Dichtmasse vorgesehen ist.

Durch die konische Form der Durchführung mit einer zum Druckstutzen hin erweiternden Ausformung ist in vorteilhafterweise eine einfache Montage des Temperatursensors von der Unterseite des Gehäuses her möglich. Darüber hinaus wird die Möglichkeit geschaffen, dass nach der Montage des Temperatursensors, insbesondere nach dem Einbringen desselben in die konische Durchführung, die Dichtmasse, welche die Anschlussleitungen des Temperatursensors in der konischen Durchführung umschließt, ebenfalls von der Unterseite des Gehäuses her in die konische Durchführung einbringbar ist. Insbesondere ist es für das Einbringen der Dichtmasse in die konische Durchführung besonders von Vorteil, dass das Eindringen von der größeren Öffnung der Durchführung her ein besonders schnelles Einbringen der Dichtmasse bis zum Spitzenende der konischen Durchführung hin ermöglicht wird, beispielsweise insbesondere bevor die in die konische Durchführung eingebrachte Dichtmasse aushärtet. Das Abdichten der konischen Durchführung mit der Dichtmasse bewirkt weiter den Vorteil, dass eine atmosphärische Trennung zwischen dem druckführenden Medium und der Gasatmosphäre im Bereich der mit den Anschlusskontakten verbundenen Elektronik geschaffen wird. Hierdurch wird eine Beaufschlagung der Elektronik mit dem die Elektronik gegebenenfalls schädigenden Medium vermieden und das separate Vorsehen einer Passivierungsschicht und/oder Schutzbeschichtung auf der Elektronik wird nicht benötigt.

Bei dem Temperatursensor kann es sich beispielsweise um einen üblichen Heißleiter (NTC), bzw. um einen anderen temperaturabhängigen Widerstand, bevorzugt mit einem negativen Temperaturkoeffizienten, handeln.

Bei einer anderen Ausführungsform der erfindungsgemäß vorgeschlagenen Vorrichtung ist es von Vorteil, wenn der Temperatursensor in das Innere des Druckstutzens hineinragt. Bevorzugt ragt der Temperatursensor bis in den Bereich des dem Drucksensor abgewandten Endes des Druckstutzens hinein. Abermals kann es bevorzugt vorgesehen sein, dass der Druckstutzen in seinem dem Drucksensor abgewandten Ende Öffnungen in der Wandung des Druckstutzens aufweist, welche ein Umströmen des Temperatursensors von dem bevorzugt fluiden Medium begünstigen. Hierdurch wird ein besonders schneller Temperaturausgleich zwischen Temperatursensor und Medium ermöglicht, was in vorteilhafter Weise eine verzögerungsfreie Erfassung der aktuellen Temperatur des Mediums ermöglicht.

Weiterhin kann es vorgesehen sein, dass die Dichtmasse eine den Temperatursensor vor mechanischen Spannungen entkoppelnde Dichtklebeverbindung ist. Hieraus ergibt sich einerseits der Vorteil, dass eine Fixierung des Temperatursensors durch das erfindungsgemäße Umschließen der Anschlussleitungen des Temperatursensors diesen in seiner Bewegungsfreiheit innerhalb des Druckstutzens einschränkt, wodurch die möglicherweise auftretenden mechanischen Biegemomente im Bereich der Abschnitte der Anschlussleitungen, die nicht von der Dichtmasse umschlossen sind, in wünschenswerter Weise minimiert werden. Hierdurch wird insbesondere eine Verformung der üblicherweise metallischen Anschlussleitungen und einer damit einhergehenden Positionsänderung des Temperatursensors im Druckstutzen verhindert. Weiterhin wird in gleicher Weise eine Bewegung des Temperatursensors, wie beispielsweise einem Schwingen oder einem Vibrieren, verhindert, welches beispielsweise durch einen pulsierenden Wechsel der Strömungsrichtung des Mediums hervorgerufen werden könnte.

Ein weiterer funktionaler Vorteil der Dichtmasse in Form einer Dichtklebeverbindung ist, dass die Dichtmasse eine sowohl formschlüssige als auch stoffschlüssige Verbindung zwischen den Anschlussleitungen des Temperatursensors und der Innenwandung der konischen Durchführung schafft.

Ergänzend oder alternativ kann es weiter von Vorteil sein, wenn die Dichtmasse wenigstens die halbe Länge der Anschlussleitungen des Temperatursensors umschließt.

Eine weitere vorteilhafte Ausführungsform der Vorrichtung kann dadurch bereitgestellt werden, wenn die Dichtmasse die konische Durchführung im Wesentlichen druckdicht verschließt. Hierdurch wird in besonders einfacher Weise sichergestellt, dass die freien Enden der Anschlussleitungen sowie auch die Anschlusskontakte im Gehäuse nicht mit dem Medium in Kontakt gelangen, wodurch diese in ihrer Funktion nachteilig beeinträchtigt werden könnten. Somit ist es dementsprechend nicht erforderlich, die freien Enden der Anschlussleitungen sowie die Anschlusskontakte sowie die eventuell weitere im Gehäuse aufgenommene Elektronik und/oder elektronische Schaltungen durch eine gesonderte Isolierung und/oder Passivierung vor einem Kontakt mit dem Medium zu schützen.

Ebenso kann es weiterhin von Vorteil sein, wenn die Dichtmasse die konische Durchführung im Wesentlichen vollständig ausfüllt. Hierdurch wird die Haltefunktion der Dichtmasse sowie auch die Dichtfunktion in vorteilhafter Weise optimiert.

Gemäß einer weiteren optionalen Ausgestaltung der Vorrichtung kann es vorgesehen sein, dass zur Kontaktierung der Anschlussleitungen des Temperatursensors mit den Anschlusskontakten wahlweise Leitklebeverbindungen, Lötverbindungen oder Schweißverbindungen vorgesehen sind. Ebenso ist eine Kombination mehrerer dieser Verbindungsweisen denkbar.

Weiterhin ist es denkbar, dass die Anschlusskontakte im Wesentlichen parallel zur Längsausrichtung des Druckstutzens, oder aber im Winkel zu diesem angeordnet sind. Hierdurch wird weiterhin eine Vielzahl von Anordnungen geschaffen, welche sich im Einzelfall produktionstechnisch vorteilhaft auswirken.

Alternativ oder ergänzend kann es ebenso vorgesehen sein, dass die Anschlusskontakte in Form von Kontaktstiften und/oder einer oder mehreren Kontaktbuchsen ausgebildet sind, und die Anschlusskontakte weiter mit einer Auswerteelektronik verbindbar sind. Hierzu kann es weiterhin vorgesehen sein, dass eine mögliche Auswerteelektronik, beispielsweise in einem weiterhin in dem Gehäuse angeordneten Elektronikraum vorgesehen ist. Der Elektronikraum ist hierbei bevorzugt vom Messraum getrennt angeordnet. Insbesondere besteht keine Verbindung des Messraums mit dem Elektronikraum, so dass das druckführende Medium in den Elektronikraum eindringen kann. Vielmehr ist es abermals bevorzugt vorgesehen, dass der Elektronikraum gegenüber der Umgebung und insbesondere gegenüber der Umgebung mit dem druckführenden Medium abgedichtet ist. Ebenso ist es denkbar, dass die Auswerteelektronik für den Temperatursensor von einer weiteren Auswerteelektronik für den Drucksensor getrennt ist, oder aber der Temperatursensor und der Drucksensor sich eine gemeinsame Auswerteelektronik teilen.

Darüber hinaus wird ein erfindungsgemäßes Verfahren zur Herstellung einer Vorrichtung zur Erfassung des Drucks und der Temperatur eines Mediums vorgeschlagen, welches folgende Verfahrensschritte umfasst:
- Einbringen eines Temperatursensors in eine konische Durchführung in einem Druckstutzen eines Gehäuses;
- Eingeben einer Dichtmasse in das geöffnete Ende der konischen Durchführung, um die konische Durchführung wenigstens teilweise mit einer Dichtmasse auszufüllen, wobei wahlweise vor oder nach dem Einbringen der Dichtmasse ein Herstellen einer elektrischen Kontaktierung der Anschlussleitungen mit im Gehäuse angeordneten Anschlusskontakten erfolgt.

Dem Verfahren zur Herstellung einer billigen Ausführungsform der zuvor beschriebenen Vorrichtung werden dementsprechend dieselben Vorteile der jeweiligen einzelnen Merkmale zugesprochen.

### Kurze Beschreibung der Zeichnungen

Eine bevorzugte Ausführungsform der Erfindung ist in der Zeichnung dargestellt und in der nachfolgenden Beschreibung näher erläutert.

Es zeigt:

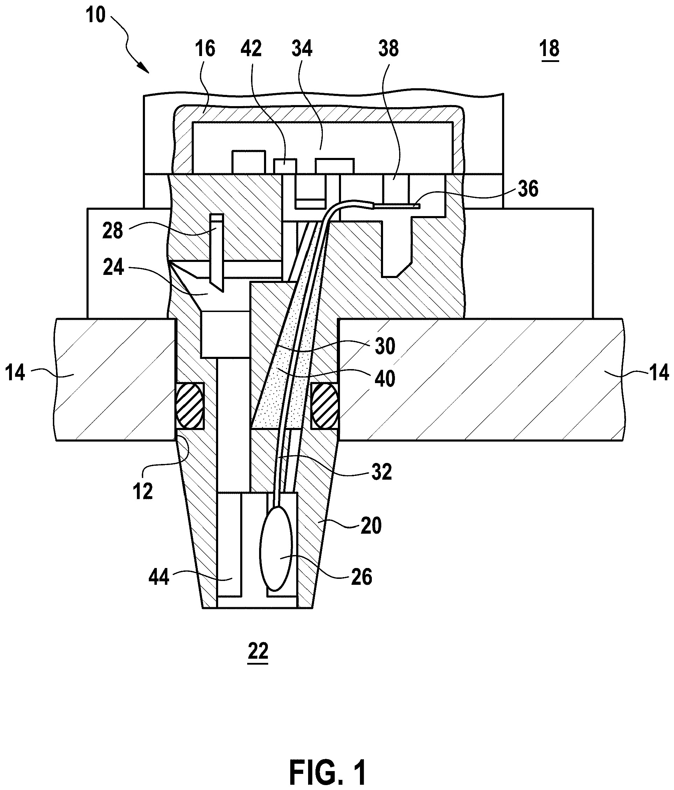

- Fig. 1: Eine bevorzugte Ausführungsform der erfindungsgemäßen Vorrichtung.

### Ausführungsformen der Erfindung

In Figur 1 ist eine bevorzugte Ausführungsform der erfindungsgemäßen Vorrichtung 10 gezeigt, welche in der bevorzugten Weise in einer Durchtrittsöffnung 12 eines Wandabschnitts 14 montiert ist. Die Vorrichtung 10 weist weiterhin ein Gehäuse 16 auf, welches im Wesentlichen in der äußeren Umgebung 18 im Bereich des Wandabschnitts 14 und im Wesentlichen lediglich mit einem bevorzugt rotationssymmetrischen Druckstutzen 20 durch eine hierzu vorgesehene Durchtrittsöffnung 12 durch den Wandabschnitt 14 hindurch in einen das Medium führenden Raum 22 hineinragt. Der Druckstutzen 20 weist hierbei bevorzugt die Form eines Hohlzylinders auf, und stellt somit eine bevorzugte Verbindung des Raumes 22 mit dem Medium und einem in dem Gehäuse 16 angeordneten Messraum 24 her. Das Gehäuse 16 der Vorrichtung 10 wird hierbei bevorzugt durch nicht dargestellte Fixierelemente, insbesondere Schrauben und/oder Gewindebolzen, an dem Wandabschnitt 14 gehalten. Weiterhin weist der Druckstutzen 20 im Bereich des Wandabschnitts 14 an seiner äußeren Umfangsfläche eine nicht bezifferte Nut zur Aufnahme beispielsweise eines Dichtrings auf, um die Durchtrittsöffnung 12 nach der Montage der Vorrichtung 10 druckdicht abzudichten.

Wie der Darstellung von Figur 1 weiterhin entnommen werden kann, weist die Vorrichtung 10 ferner einen in dem Gehäuse 16 angeordneten Temperatursensor 26 und einen Drucksensor 28 auf, wobei der Drucksensor 28 in dem Messraum 24 angeordnet ist. Das Gehäuse 16 der Vorrichtung 10 weist weiterhin erfindungsgemäß wenigstens eine in den Druckstutzen 20 mündende konische Durchführung 30 auf, welche sich in Richtung des Druckstutzens hin erweitert.

Der Temperatursensor 26 weist weiterhin Anschlussleitungen 32 auf, welche von dem im Bereich der Öffnung des Druckstutzens angeordneten Temperatursensor 26 aus durch die konische Durchführung 30 hindurch in einen weiterhin in dem Gehäuse 16 angeordneten Elektronikraum 34 hineinragen. Die freien Enden 36 der Anschlussleitungen 32 sind bevorzugt wie dargestellt mit den in dem Gehäuse angeordneten Anschlusskontakten 38 elektrisch leitend verbunden.

In der konischen Durchführung 30 ist weiterhin in erfindungsgemäß bevorzugter Weise eine Dichtmasse 40 vorgesehen, welche die Anschlussleitungen 32 des Temperatursensors 26 wenigstens abschnittsweise, bevorzugt jedoch durch vollständiges Ausfüllen der konischen Durchführung 30 vollumfänglich umschließt und die Anschlussleitungen 32 innerhalb der konischen Durchführung 30 fixiert. Des Weiteren weist die dargestellte Vorrichtung 10 eine in den Elektronikraum 34 angeordnete Auswerteelektronik 42 auf, welche bevorzugt über die Anschlusskontakte 38 mit den Anschlussleitungen 32 des Temperatursensors 26 verbunden ist und eine elektrische Schaltung bereitstellt, welche zur Auswertung der erfassten Daten des Temperatursensors dient. Weiterhin ist in der Darstellung von Figur 1 gezeigt, dass der Druckstutzen 20 an seinem in dem das Medium führenden Raum 22 angeordneten Ende umfänglich angeordnete Öffnungen 44 aufweist, welche ein Durchströmen des Druckstutzens 20 senkrecht zur Längsausrichtung des Druckstutzens 20 ermöglicht, um ein vermehrtes Umströmen des Temperatursensors 26 zu bewirken und einen regen Austausch mit dem Temperatursensor 26 in Kontakt stehenden Mediums zu erreichen.

## Patentansprüche

1. Vorrichtung (10) zur Erfassung des Drucks und der Temperatur eines Mediums, wobei in einem gemeinsamen Gehäuse (16) ein Temperatursensor (26) und ein Drucksensor (28) angeordnet sind, wobei das Gehäuse (16) wenigstens einen Messraum (24) umfasst, wobei der Messraum (24) über einen Druckstutzen (20) des Gehäuses (16) mit einem das Medium aufnehmenden Raum (22) verbunden ist, wobei der Drucksensor (28) in dem Messraum (24) angeordnet ist, wobei der Temperatursensor (26) Anschlussleitungen (32) aufweist, wobei in dem Gehäuse (16) zur Kontaktierung der Anschlussleitungen (32) des Temperatursensors (26) ferner Anschlusskontakte (38) vorgesehen sind,
wobei das Gehäuse (16) zur Aufnahme des Temperatursensors (26) in dem Druckstutzen (20) wenigstens eine in den Druckstutzen (20) mündende konische Durchführung (30) aufweist, wobei in der konischen Durchführung (30) wenigstens abschnittsweise eine die Anschlussleitungen (32) des Temperatursensors (26) umschließende Dichtmasse (40) vorgesehen ist, **dadurch gekennzeichnet, dass** sich die konische Durchführung (30) zum Druckstutzen (20) hin erweitert.

2. Vorrichtung (10) nach dem vorhergehenden Anspruch, wobei der Temperatursensor (26) in das Innere des Druckstutzens (20) ragt.

3. Vorrichtung (10) nach einem der vorhergehenden Ansprüche, wobei die Dichtmasse (40) eine den Temperatursensor (26) vor mechanischen Spannungen entkoppelnde Dichtklebeverbindung ist.

4. Vorrichtung (10) nach einem der vorhergehenden Ansprüche, wobei die Dichtmasse (40) wenigstens die halbe Länge der Anschlussleitungen (32) des Temperatursensors (26) umschließt.

5. Vorrichtung (10) nach einem der vorhergehenden Ansprüche, wobei die Dichtmasse (40) die konische Durchführung (30) druckdicht verschließt.

6. Vorrichtung (10) nach einem der vorhergehenden Ansprüche, wobei die Dichtmasse (40) die konische Durchführung (30) vollständig ausfüllt.

7. Vorrichtung (10) nach einem der vorhergehenden Ansprüche, wobei zur Kontaktierung der Anschlussleitungen (32) des Temperatursensors (26) mit den Anschlusskontakten (38) Leitklebeverbindungen und/oder Lötverbindungen und/oder Schweißverbindungen vorgesehen sind.

8. Vorrichtung (10) nach dem vorhergehenden Anspruch, wobei die Anschlusskontakte (38) parallel zur Längsausrichtung des Druckstutzens (20) oder im Winkel zu dieser angeordnet sind.

9. Vorrichtung (10) nach einem der beiden vorhergehenden Ansprüche, wobei die Anschlusskontakte (38) mit der Auswerteelektronik (42) verbundene Steckerkontaktstifte sind.

10. Verfahren zur Herstellung einer Vorrichtung (10) zur Erfassung des Drucks und der Temperatur eines Mediums nach einem der voranstehenden Ansprüche, **gekennzeichnet durch** folgende Schritte:
- Einbringen eines Temperatursensors (26) in eine konische Durchführung (30) in einem Druckstutzen (20) eines Gehäuses (16), wobei sich die konische Durchführung (30) zum Druckstutzen (20) hin erweitert;
- Eingeben einer Dichtmasse (40) in das geöffnete Ende der konischen Durchführung (30), um die konische Durchführung (30) wenigstens teilweise mit einer Dichtmasse (40) auszufüllen,
wobei wahlweise vor oder nach dem Eingeben der Dichtmasse (40) ein Herstellen einer elektrischen Kontaktierung der Anschlussleitungen (32) mit im Gehäuse (16) angeordneten Anschlusskontakten (38) erfolgt.

## Claims

1. Device (10) for detecting the pressure and the temperature of a medium, wherein a temperature sensor (26) and a pressure sensor (28) are arranged in a common housing (16), wherein the housing (16) comprises at least one measuring chamber (24), wherein the measuring chamber (24) is connected via a pressure connector (20) of the housing (16) to a chamber (22) which accommodates the medium, wherein the pressure sensor (28) is arranged in the measuring chamber (24), wherein the temperature sensor (26) has connecting lines (32), wherein furthermore, connecting contacts (38) are provided in the housing (16) for the contacting of the connecting lines (32) of the temperature sensor (26), wherein the housing (16) for accommodating the temperature sensor (26) has, in the pressure connector (20), at least one conical leadthrough (30) which opens into the pressure connector (20), wherein, at least in portions in the conical leadthrough (30), there is provided a sealing compound (40) which encloses the connecting lines (32) of the temperature sensor (26), **characterized in that** the conical leadthrough (30) widens towards the pressure connector (20).

2. Device (10) according to the preceding claim, wherein the temperature sensor (26) projects into the interior of the pressure connector (20).

3. Device (10) according to any of the preceding claims, wherein the sealing compound (40) is a sealing adhesive connection which decouples the temperature sensor (26) from mechanical stresses.

4. Device (10) according to any of the preceding claims, wherein the sealing compound (40) encloses at least half of the length of the connecting lines (32) of the temperature sensor (26).

5. Device (10) according to any of the preceding claims, wherein the sealing compound (40) closes off the conical leadthrough (30) in pressure-tight fashion.

6. Device (10) according to any of the preceding claims, wherein the sealing compound (40) completely fills the conical leadthrough (30).

7. Device (10) according to any of the preceding claims, wherein, for the contacting of the connecting lines (32) of the temperature sensor (26) to the connecting contacts (38), conductive adhesive connections and/or soldered connections and/or welded connections are provided.

8. Device (10) according to the preceding claim, wherein the connecting contacts (38) are arranged parallel to the longitudinal orientation of the pressure connector (20) or at an angle with respect thereto.

9. Device (10) according to either of the two preceding claims, wherein the connecting contacts (38) are plug contact pins connected to the evaluating electronics (42).

10. Method for producing a device (10) for detecting the pressure and the temperature of a medium according to any of the preceding claims, **characterized by** the following steps:
- inserting a temperature sensor (26) into a conical leadthrough (30) in a pressure connector (20) of a housing (16), wherein the conical leadthrough (30) widens towards the pressure connector (20);
- introducing a sealing compound (40) into the opened end of the conical leadthrough (30) in order to at least partially fill the conical leadthrough (30) with a sealing compound (40), wherein, optionally before or after the introduction of the sealing compound (40), electrical contact is produced between the connecting lines (32) and connecting contacts (38) arranged in the housing (16) .

## Revendications

1. Dispositif (10) de détection de la pression et de la température d'un milieu, un capteur de température (26) et un capteur de pression (28) étant disposés dans un boîtier commun (16), le boîtier (16) comprenant au moins un espace de mesure (24), l'espace de mesure (24) étant relié par un raccord de pression (20) du boîtier (16) à un espace de réception de milieu (22), le capteur de pression (28) étant disposé dans l'espace de mesure (24), le capteur de température (26) comportant des lignes de connexion (32), des contacts de connexion (38) étant en outre prévus dans le boîtier (16) pour venir en contact avec les lignes de connexion (32) du capteur de température (26), le boîtier (16) comportant au moins un passage conique (30), qui débouche dans le raccord de pression (20), pour recevoir le capteur de température (26) dans le raccord de pression (20), une matière d'étanchéité (40) qui entoure les lignes de connexion (32) du capteur de température (26) étant prévue au moins partiellement dans le passage conique (30), **caractérisé en ce que** le passage conique (30) s'élargit en direction du raccord de pression (20).

2. Dispositif (10) selon la revendication précédente, le capteur de température (26) faisant saillie à l'intérieur du raccord de pression (20).

3. Dispositif (10) selon l'une des revendications précédentes, la matière d'étanchéité (40) étant une liaison adhésive d'étanchéité découplant le capteur de température (26) de contraintes mécaniques.

4. Dispositif (10) selon l'une des revendications précédentes, la matière d'étanchéité (40) entourant au moins la moitié de la longueur des lignes de connexion (32) du capteur de température (26).

5. Dispositif (10) selon l'une des revendications précédentes, la matière d'étanchéité (40) fermant le passage conique (30) de manière étanche à la pression.

6. Dispositif (10) selon l'une des revendications précédentes, la matière d'étanchéité (40) remplissant complètement le passage conique (30).

7. Dispositif (10) selon l'une des revendications précédentes, des liaisons adhésives de conduction et/ou des liaisons brasées et/ou des liaisons soudées étant prévues pour mettre les lignes de connexion (32) du capteur de température (26) en contact avec les contacts de connexion (38).

8. Dispositif (10) selon la revendication précédente, les contacts de connexion (38) étant disposés parallèlement à la direction longitudinale du raccord de pression (20) ou angulairement par rapport à celle-ci.

9. Dispositif (10) selon l'une des deux revendications précédentes, les contacts de connexion (38) étant des broches de contact enfichables reliées à l'électronique d'évaluation (42).

10. Procédé de fabrication d'un dispositif (10) de détection de la pression et de la température d'un milieu selon l'une des revendications précédentes, **caractérisé par** les étapes suivantes :
- introduire un capteur de température (26) dans un passage conique (30) ménagé dans un raccord de pression (20) d'un boîtier (16), le passage conique (30) s'élargissant en direction du raccord de pression (20),
- introduire une matière d'étanchéité (40) dans l'extrémité ouverte du passage conique (30) pour remplir au moins partiellement le passage conique (30) avec une matière d'étanchéité (40),
les lignes de connexion (32) étant mises en contact électrique avec des contacts de connexion (38), disposés dans le boîtier (16), au choix avant ou après l'introduction de la matière d'étanchéité (40).
